# EUROPEAN PATENT SPECIFICATION

(11) **EP 2 751 024 B1**
(45) Date of publication and mention of the grant of the patent: **21.11.2018**
(21) Application number: 12827425.5
(22) Date of filing: 04.09.2012
(51) Int. Cl.: C01B 3/24, C10G 1/00, B01D 15/30, B01J 19/00

(54) **INTEGRATION OF A FISCHER-TROPSCH SYSTEM AND SYN-GAS GENERATION**
INTEGRATION EINES FISCHER-TROPSCH-SYSTEMS UND EINER SYNTHESEGASERZEUGUNG
INTÉGRATION DE SYSTÈME DE FISCHER-TROPSCH (FT) ET GÉNÉRATION DE GAZ DE SYNTHÈSE

(30) Priority: 01.09.2011 US 201161530147 P
(43) Date of publication of application: 09.07.2014
(73) Proprietor: GTLPetrol, LLC, New York, New York 10022 (US)
(72) Inventor: ALLAM, Rodney J., Chippenham Wiltshire SN14 6LY (GB)
(74) Representative: Mammel, Ulrike
(86) International application number: PCT/US2012/053685
(87) International publication number: WO 2013/033711

(56) References cited:
- EP-A1- 1 887 072
- WO-A1-2013/017700
- CA-A1- 2 752 839
- US-A- 4 044 063
- US-A1- 2003 119 924
- US-A1- 2004 092 778
- US-A1- 2007 142 481
- US-A1- 2008 021 118
- US-B1- 6 958 364

## Description

### CLAIM OF PRIORITY

This application claims priority to U.S. Patent Application Serial No. 61/530,147, filed on September 1, 2011.

### TECHNICAL FIELD

This invention relates to integrating a Fischer-Tropsch (FT) system and syn-gas generation.

### BACKGROUND

An integrated FT plant comprises a H₂+CO syn-gas generation system which provides feed gas to a Fischer-Tropsch catalytic hydrocarbon synthesis system with an associated power and heat energy system.

High-efficiency, low-capital cost, together with a low carbon footprint, are the major objectives of a total facility. US patent 6,534,551 describes an integrated synthesis gas generation system comprising a two-stage synthesis gas generation unit integrated with a gas turbine which provides at least part of the energy required to drive an O₂ production plant. The O₂ plant can be either a cryogenic air separation unit or high temperature mixed oxide O₂ ion transfer membrane reactor integrated with the gas turbine. The two-stage synthesis gas generator comprises a POX or ATR coupled in either case in a parallel configuration with a gas-heated catalytic steam/hydrocarbon reformer (GHR) in which the heating gas is the mixed total product from each reactor.

The FT hydrocarbon synthesis reactor can comprise either a single-stage or a two-stage system with cooling and separation between stages of aqueous and hydrocarbon liquid phases from un-reacted synthesis gas and inert components in the gas phase. This first-stage separated gas stream is heated and used as feed to the second-stage FT reactor. Further related prior art is disclosed in CA 2752839 A1, US 6,958,364 B1 and US 2007/0142481 A1.

A number of different FT reactor designs are possible. The two most frequently considered are the fixed bed and slurry phase bubbling bed configurations. Whichever design concept for the FT reactor system is adopted, there must be a procedure for efficiently utilising the uncondensed off-gas leaving the FT system so that it can be effectively used in the syn-gas generation system. The off gas contains significant flows of un-reacted H₂ and CO plus a large quantity of CO₂, CH₄ C₂, C₃ and C₄. The C₃ and C₄ must be removed as valuable products, the CO₂ must be mostly recycled back to the syn-gas generation section together with the CH₄ and C₂ fraction while inert N₂+A must be removed to prevent a build-up in the system. The treatment of this off-gas with maximum thermal efficiency and minimum emission of CO₂ to the atmosphere at low capital cost and power consumption is the object of this invention.

### SUMMARY

A method for separating components includes receiving off-gas from a Fischer-Tropsch hydrocarbon synthesis reaction process. The off-gas is scrubbed with a light oil at least proximate atmospheric temperature to substantially remove a mixture of C₃ and C₄. The C₃ and C₄ are separated from the mixture into two separate streams using distillation columns in a Fischer-Tropsch The method according to the invention is defined in claim 1.

The details of one or more embodiments of the invention are set forth in the accompanying drawings and the description below. Other features, objects, and advantages of the invention will be apparent from the description and drawings, and from the claims.

### DESCRIPTION OF DRAWINGS

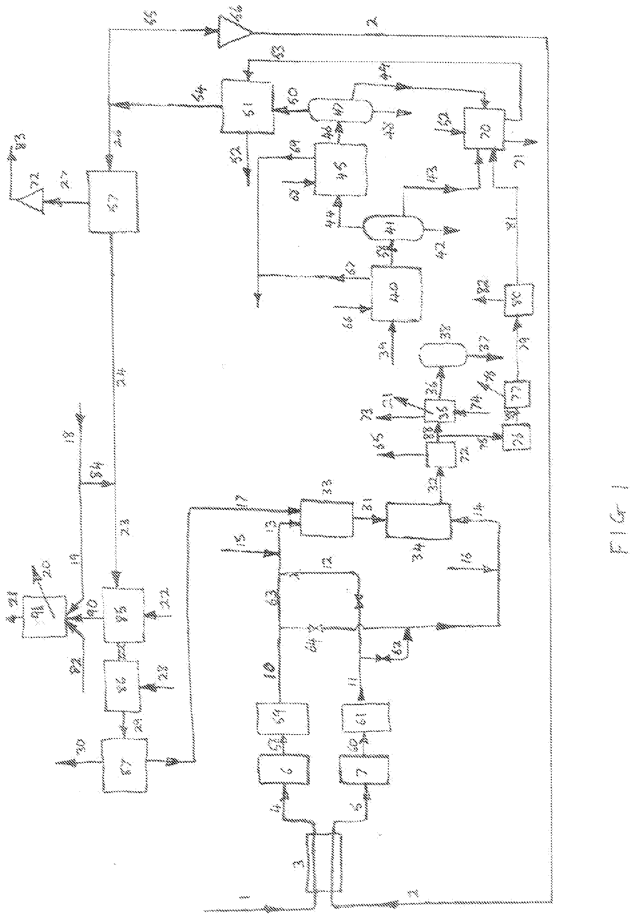

FIG. 1 is an example system for integrating an FT system and syn-gas generation.

Like reference symbols in the various drawings indicate like elements.

### DETAILED DESCRIPTION

The off-gas from a Fischer-Tropsch hydrocarbon synthesis reaction process following condensation and removal of the aqueous and hydrocarbon liquid phases is to be treated in the following sequence:
1. Scrub the off-gas with a light oil at near to atmospheric temperature to remove the bulk of the C₃ and C₄ hydrocarbons plus traces of higher molecular weight hydrocarbons present in the gas phase. The light oil is taken from one of the product streams produced in the FT oil/wax hydro-treating, isomerisation and separation unit. The light oil containing the dissolved C₃ and C₄ components is returned to the distillation columns in the FT upgrading unit where the C₃+C₄ hydrocarbons are separated and removed as product streams.
2. The FT off-gas retains a fairly high pressure since typically the FT syn-gas feed is at 40 bar, while the off-gas is at about 36 bar. The off-gas contains the net excess CO₂ produced primarily in the syn-gas generation unit which must be removed continuously from the plant plus the CO₂ which must be recycled back to the syn-gas generation unit to achieve the required CO to H₂ ratio in the FT feed. This ratio is typically in the range 1.9 to 2.1.

A highly efficient treatment of the FT off-gas following C₃+C₄ removal is to separate a portion of the gas and remove substantially all the CO₂ equivalent to the net excess CO₂ which is produced in the whole system. The CO₂ can be removed by absorption in a physical or chemical solvent scrubbing system such as Selexol or amine.

The separated CO₂ stream is then available for sequestration in a geological structure or for use in enhanced oil recovery operations following compression. The treated gas stream from the CO₂ separation unit can be used a part of the fuel stream for the gas turbine without any further compression. If there is no requirement for pure CO₂ the separated portion of the FT off-gas which contains the net CO₂ product from the whole FT facility can be used a part of the gas turbine fuel stream and the CO₂ content will then be vented to the atmosphere with the gas turbine exhaust from the fired heated. The remaining bulk of the off-gas, which contains the recycle CO₂ plus some (CO+H₂) and the C₁+C₂ hydrocarbons is then compressed at low pressure ratio and recycled to the syn-gas feed point. The compression is adiabatic with no after-cooler so that the heat of compression is retained in the pressurized recycle gas stream. The recycle gas is de-sulphurised before being mixed with the fresh de-sulphurised natural gas feeds to the POX or ATR and the GHR.
3. The off-gas from the FT system following (C₃+C₄) and net product CO₂ removal steps is compressed to the syn-gas generation inlet pressure plus system pressure drop. It is then mixed with the net natural gas feed to the syn-gas generation section to produce two separate feed streams, one for the ATR and the other for the GHR. The GHR produces approximately 27% to 30% of the (CO+H₂) syn-gas while the ATR produces about 70% to 73% of the syn-gas. In spite of this it is beneficial to feed 40% to 60% of the recycle stream to the GHR and the remaining recycle gas to the ATR. The bias towards the GHR is due to the difference in the reaction pathways for the CO and H₂ portion of the recycle gas feed to these units. In the ATR or the POX reactor, H₂ and CO react with O₂ and are oxidised to CO₂ and H₂O in the POX burner producing heat which reduces the required natural gas feed rate by an equivalent amount. In the GHR the CO and CO₂ in the recycle stream initially undergo a methanation reaction with the hydrogen which reduces the natural gas feed requirement due to the reaction heat release and the production of CH₄. The net effect is more favourable in terms of the thermal efficiency improvement in the GHR steam/natural gas catalytic reformer compared to the ATR. A separate effect is a slightly larger conversion of recycle CO₂ to CO by shift reaction with hydrogen in the GHR compared to the ATR.
4. An additional important consideration of the proposed treatment procedure is the elimination of (N₂+A) with the portion of the FT off-gas containing the net CO₂ product which is defined in (2). The build-up of N₂+A in the system as defined is approximately five times the flow of fresh A and N₂ into the system from the oxygen and natural gas feed streams. Note that a further point in the system where N₂+A is eliminated is the hydrogen PSA which is fed with a shifted and cooled portion of the product syn-gas stream leaving the waste heat boiler. The low pressure waste gas from this PSA containing (A+N₂) is added to the fuel gas stream which is burned in the gas turbine exhaust fired heater.

**FIG 1** shows a diagram of the process. The heat and material balance for important points in FIG1 are shown in Table 1.

Fresh natural gas feed 1 and recycle fuel gas 2 are preheated in heat exchanger 3 and separately de-sulphurized in units 6 and 7 of all inorganic and organic sulphur compounds. The exit streams 58 and 60 are heated in heat exchanger passes 59 and 61. The heated streams 10 and 11 are separately blended in the proportion 50% flow of the recycle stream 11 to the ATR reactor 33, stream 12 and 50% of the recycle flow to the GHR reactor 34, stream 62. The remaining total feed flow to the ATR reactor 33, stream 13 comprises the natural gas flow 63 blended with a superheated steam stream 15 and a pre-reheated oxygen stream 17. The total feed flow to the GHR reactor 34, stream 14 comprises the natural gas flow stream 64 blended with the superheated steam stream 16 and the portion of the recycle stream 62. The exit flow stream 31 from the ATR reactor 33 is blended with the exit flow from the catalyst filled open ended tubes in the GHR reactor 34 and the combined total flow is used in the shell side of the tubular GHR reactor to provide the heat required for the steam/hydrocarbon reforming reaction. The total syn-gas product stream 32 leaving the shell side of the GHR reactor 34 passes through a waste heat boiler 72 generating high pressure steam 65 and a heat exchanger system 35 comprising a set of heat exchangers providing heat 21 and low pressure steam 73 with condensate inlet stream 74. Part of the steam stream 73 is used for regeneration of the amine solvent in the CO2 removal unit 57. The syn-gas stream 36 cooled to near ambient temperature passes through a separator 38 where condensed water 37 is removed and the gas stream 39 is passed into the first stage of the Fischer-Tropsch fixed bed catalyst in tube reactor systems 40 which includes heat exchange to heat the syn-gas to the required reaction temperature and cool the products leaving the reactor tubes. The total product stream 58 from the reactor system 40 at a temperature at which no solid hydrocarbons are present passes through a separator 41 producing an aqueous stream 42, a hydrocarbon stream 43 and a gaseous product stream 44 which passes into the second stage FT reactor system 45. The exit stream from reactor system 45, stream 46 is separated in 47 into an aqueous stream 48, a hydrocarbon stream 49 and a gaseous effluent stream 50. The two aqueous streams 42 and 48 are combined and sent to a water treatment system. The two hydrocarbon streams 43 and 49 are sent to a treating system 70 comprising hydro-treating and cracking, isomerisation and separation of products by distillation. Each of the FT reactor systems 40 and 45 is fed on the shell side of the tubular reactors with preheated condensate streams 66 and 68 producing steam streams 67 and 69 utilising the exothermic heat of the FT synthesis reaction. The final gaseous product stream 50 at near ambient temperature passes into an oil scrub tower 51 where it is scrubbed with a light oil fraction 53 taken from the product distillation system in unit 70 and which has no C₃ and C₄ hydrocarbon content. The C₃ and C₄ content of stream 50 are largely removed in the exit oil stream 52 which is returned to the product distillation unit in which the C₃ and C₄ adsorbed from stream 50 are separated and recovered as a part of the product streams 71. The gas 54 leaving scrub tower 51 is divided into two streams. The first stream 26 contains all of the CO₂ which is produced as the net product stream by the whole facility. It is treated in the CO₂ separator 57 which in this case is an amine system using part of low pressure steam 73 for regeneration. The pure CO₂ separated 27 can then be compressed in 72 and delivered 83 to a pipeline for disposal. The second much larger stream 55 which contains all of the recycle CO₂ plus un-reacted (H₂+CO) plus CH₄ and C₂ hydrocarbons and inert (N₂+A) is compressed in 56 and passed without any cooling as stream 2 to the syn-gas generation system. The treated gas stream 24 leaving the CO₂ removal amine scrub system 57 is mixed with a natural gas feed stream 84 to form the total fuel gas stream 23 to the gas turbine 85. The gas turbine is directly coupled to and provides all the power for the main air compressor 86 which delivers a feed air steam 29 to the cryogenic oxygen plant 87. The gas turbine is also coupled to an electric generator which provides excess power used mainly to provide electrical energy for the drive motor of the air booster compressor which is part of the pumped oxygen cryogenic oxygen plant 87. The oxygen plant 87 delivers an oxygen stream 17 at 99.5 mol% purity to provide feed to the ATR 33 with no further compression required. A waste nitrogen stream 30 is vented to the atmosphere. A portion of the syn-gas stream 88 leaving the waste heat boiler 72 as stream 75 is passed through a catalytic CO shift converter 76 which converts the bulk of the CO by reaction with excess steam to H₂+CO₂. The exit gas stream 89 is cooled in the heat exchanger pass 77 producing heat stream 78 and stream 79 enters the multi-bed pressure swing adsorption unit 80. The feed stream is separated into a pure H₂ stream 81 which provides the H₂ required for the product upgrading system 70 together with a low pressure fuel gas stream 82. The fuel gas steam 82 together with a natural gas stream 19 provide the fuel streams to a fired heater 89 which uses as oxidant gas the hot gas turbine exhaust stream 90. This heater provides heat steam 20. The heat streams 20, 21 and 78 together provide the heat required for the preheating of the feed streams including superheating steam and heating natural gas, recycle gas and oxygen streams. The net N₂+A entering the system in the feed natural gas and O₂ concentrate in the plant and are contained in the fuel gas streams 24 and 82 so that following combustion they are vented to atmosphere via the exhaust stream 21 from the fired heater 89. The high pressure steam stream 65, the medium pressure steam streams 67 and 69 and part of the low pressure steam stream 73 are superheated and used to provide power in a steam turbine system.

A number of embodiments of the invention have been described. Nevertheless, it will be understood that various modifications may be made without departing from the spirit and scope of the invention. Accordingly, other embodiments are within the scope of the following claims.

## Claims

1. A method for separating components, comprising:
cooling a syngas stream (36) to ambient temperature and passing said cooled gas through a separator (38) to remove condensed water;
passing the syngas (39) exiting said separator (38) to a first stage of a Fischer-Tropsch reactor system (40), thus obtaining a product stream (58) from said first stage Fischer-Tropsch reactor system (40) at a temperature at which no solid hydrocarbons are present; passing the product stream (58) through a first separator (41), thereby producing a first aqueous stream (42), a first hydrocarbon stream (43), and a first gaseous product stream (44) which passes into a second stage Fischer-Tropsch reactor system (45);
passing the exit stream (46) of the second Fischer-Tropsch reactor system (45) into a second separator (47) thereby producing a second aqueous stream (48), a second hydrocarbon stream (49) and in a second gaseous product stream (50) at ambient temperature;
sending the first and second hydrocarbon streams (43, 44) to a treating system (70) comprising hydro-treating and cracking, isomerization and separation of products by distillation;
scrubbing the second gaseous product stream (50) with a light oil (53), in an oil scrub tower (51) to remove a mixture of C3 and C4 and to produce an exit oil stream (52) comprising the light oil (53), C3- and C4-hydrocarbons, wherein the light oil (53) is taken from a product distillation system of the treating system (70) and has no C3- and C4-hydrocarbon content, said treating system (70) being fed by the first and second hydrocarbon streams (43, 44) and a pure H2 -stream (81);
returning the exit oil stream (52) to said product distillation system of said treating system (70); thus separating C3 and C4 from the exit oil stream (52) into two separate streams (53, 71) using the distillation columns of said product distillation system (70);
dividing the gas (54) leaving the oil scrub tower (51) into two streams, a first stream (26) to be treated in a separator (57) to obtain pure CO2 (27) and a second larger stream (55) containing CO2, unreacted H2, CO, CH4, C2-hydrocarbons and inert, said second stream (55) being compressed (56) and passed to the syngas generation system providing the syngas stream (36).

## Patentansprüche

1. Verfahren zum Trennen von Komponenten, umfassend:
Kühlen eines Syngas-Stroms (36) auf Umgebungstemperatur und Leiten des gekühlten Gases durch einen Separator (38), um kondensiertes Wasser zu entfernen;
Leiten des Syngases (39), das aus dem Separator (38) austritt, zu einer ersten Stufe eines Fischer-Tropsch-Reaktorsystems (40), um einen Produktstrom (58) aus der ersten Stufe des Fischer-Tropsch-Reaktorsystems (40) bei einer Temperatur zu erhalten, bei der keine festen Kohlenwasserstoffe vorhanden sind; Leiten des Produktstroms (58) durch einen ersten Separator (41), um einen ersten wässrigen Strom (42), einen ersten Kohlenwasserstoffstrom (43) und einen ersten gasförmigen Produktstrom (44), der einer zweiten Stufe eines Fischer-Tropsch-Reaktorsystems (45) zugeführt wird, zu erhalten;
Leiten das Abstroms (46) des zweiten Fischer-Tropsch-Reaktorsystems (45) in einen zweiten Separator (47), um einen zweiten wässrigen Strom (48), einen zweiten Kohlenwasserstoffstrom (49) und einen zweiten gasförmigen Produktstrom (50) bei Umgebungstemperatur zu erhalten;
Zuführen des ersten und des zweiten Kohlenwasserstoffstroms (43, 44) zu einem Behandlungssystem (70) umfassend Hydrobehandlung und -cracking, Isomerisierung und Trennung von Produkten durch Destillation;
Waschen des zweiten gasförmigen Produktstroms (50) mit einem leichten Öl (53) in einem Ölwäscherturm (51), um ein Gemisch von C3 und C4 zu entfernen und einen Öl-Abstrom (52) zu erhalten, der das leichte Öl (53) und C3- und C4-Kohlenwasserstoffe umfasst, wobei das leichte Öl (53) aus einem Produktdestillationssystem des Behandlungssystems (70) entnommen ist und keinen und C3- und C4-Kohlenwasserstoffgehalt aufweist, wobei dem Behandlungssystem (70) der erste und der zweite Kohlenwasserstoffstrom (43, 44) und ein reiner H2-Strom (81) zugeführt wird;
Rückführen des Öl-Abstroms (52) zu dem Produktdestillationssystem des Behandlungssystems (70); dadurch Trennen von C3 und C4 von dem Öl-Abstrom (52) zu zwei getrennten Strömen (53, 71) unter Verwendung der Destillationskolonnen des Produktdestillationssystems (70);
Aufteilen des Gases (54), das den Ölwäscherturm (51) verlässt, in zwei Ströme, einen ersten Strom (26) für die Behandlung in einem Separator (57), um reines CO2 (27) zu erhalten, und einen zweiten, größeren Strom (55), der CO2, nicht reagiertes H2, CO, CH4, C2-Kohlenwasserstoffe und Inertstoff enthält, wobei der zweite Strom (55) komprimiert (56) und dem Syngas-Erzeugungssystem zugeführt wird, um den Syngas-Strom (36) zu erhalten.

## Revendications

1. Procédé de séparation de composants, comprenant :
le refroidissement d'un flux de gaz de synthèse (36) à température ambiante et le passage dudit gazeux refroidi à travers un séparateur (38) pour éliminer l'eau condensée ;
le passage du gaz de synthèse (39) sortant dudit séparateur (38) vers un premier étage d'un système de réacteur de Fischer-Tropsch (40), de façon à obtenir un flux de produit (58) à partir dudit système de réacteur de Fischer-Tropsch de premier étage (40) à une température à laquelle aucun hydrocarbure solide n'est présent ; le passage du flux de produit (58) à travers un premier séparateur (41), de façon à produire un premier flux aqueux (42), un premier flux d'hydrocarbures (43), et un premier flux de produit gazeux (44) qui passe dans un système de réacteur de Fischer-Tropsch de deuxième étage (45) ;
le passage du flux de sortie (46) du deuxième système de réacteur de Fischer-Tropsch (45) dans un deuxième séparateur (47) de façon à produire un deuxième flux aqueux (48), un deuxième flux d'hydrocarbures (49) et dans un deuxième flux de produit gazeux (50) à température ambiante ;
l'envoi des premier et deuxième flux d'hydrocarbures (43, 44) vers un système de traitement (70) comprenant un hydrotraitement et un craquage, une isomérisation et une séparation de produits par distillation ;
l'épuration du deuxième flux de produit gazeux (50) avec un pétrole léger (53), dans une tour d'épuration de pétrole (51) pour éliminer un mélange de C3 et C4 et pour produire un flux de pétrole de sortie (52) comprenant le pétrole léger (53), les hydrocarbures en C3 et C4, dans lequel le pétrole léger (53) est prélevé à partir d'un système de distillation de produit du système de traitement (70) et ne contient pas d'hydrocarbures en C3 et C4, ledit système de traitement (70) étant alimenté par les premier et deuxième flux d'hydrocarbures (43, 44) et un flux de H2 pur (81) ;
le retour du flux de pétrole de sortie (52) vers ledit système de distillation de produit dudit système de traitement (70) ; de façon à séparer C3 et C4 du flux de pétrole de sortie (52) en deux flux séparés (53, 71) au moyen des colonnes de distillation dudit système de distillation de produit (70) ;
la division du gaz (54) quittant la tour d'épuration de pétrole (51) en deux flux, un premier flux (26) devant être traité dans un séparateur (57) pour obtenir du CO2 pur (27) et un deuxième flux plus grand (55) contenant du CO2, du H2 n'ayant pas réagi, CO, CH4, des hydrocarbures en C2 et inerte, ledit deuxième flux (55) étant comprimé (56) et transféré vers le système de génération de gaz de synthèse fournissant le flux de gaz de synthèse (36).
